# EUROPEAN PATENT APPLICATION

(11) **EP 1 055 497 A2**
(43) Date of publication of application: **29.11.2000**
(21) Application number: 00111176.4
(22) Date of filing: 24.05.2000
(51) Int. Cl.: B28D 1/08

(54) **Wire sawing machine for the trimming and/or squaring of blocks, particularly of stonelike material**

(30) Priority: 25.05.1999 IT TO990442
(71) Applicant: CO. FI. Plast S.a.s. di Brocco Emilio, 10010 Lessolo (Torino) (IT)
(72) Inventor: Brocco, Emilio, 10010 Lessolo (Torino) (IT)
(74) Representative: Aprà, Mario

(57) **Abstract**

The wire sawing machine for the trimming and/or squaring of blocks, particularly of stonelike material, comprises, according to the invention, a portal structure (111) for the cutting of blocks, supported relative to a substantially trestle-type support (110.2), in a manner such as to oscillate relative to a substantially horizontal axis (X-X) and in a manner such that a block of material to be trimmed or squared can be arranged through the opening of said portal (111), so that in order to trim or square a block (B) of stonelike or similar material the said portal (111) is arranged astride the said block, the portal (111) is oriented about the said axis (X-X) at an inclination relative to the horizontal corresponding to that of the face of the said block which it is desired to trim or square, and the cut is made, this sequence being repeated until the block (B) has been completely trimmed and/or squared.

## Description

The present invention relates to a wire sawing machine for the trimming and/or squaring of blocks, particularly of stonelike material.

The main object of the present invention is to provide a wire sawing machine as specified which makes it possible to trim and/or square blocks of material, such as stonelike material, simply and quickly, even in areas lacking in suitable equipment, for example in a stone quarry.

Another object of the invention is to provide a wire sawing machine as indicated which is structurally simplified and functionally safe, reliable and convenient.

With these objects in mind, the present invention provides a wire sawing machine for the trimming and/or squaring of blocks, particularly of stonelike material, whose essential feature is the subject of the main claim.

Further advantageous features are apparent from these subclaims.

The abovementioned claims are fully incorporated here by way of reference.

The present invention will be better understood from the detailed description which follows with reference to the attached drawings, given solely by way of non-limiting example, in which:
- Fig. 1 is a view in perspective of a wire sawing machine for the trimming and/or squaring of blocks, particularly of stonelike material, according to one example of embodiment of the invention;
- Figures 2 and 3 are views, respectively in frontal elevation and in lateral elevation, of the sawing machine shown in Fig. 1, with parts cut away;
- Fig. 4 is a view in section along the line IV-IV in Fig. 3, with parts cut away;
- Fig. 5 shows a view in perspective of an alternative embodiment of the wire sawing machine according to Fig. 1;
- Figures 6 and 7 are views, respectively, in frontal elevation and in lateral elevation of the sawing machine shown in Fig. 5.

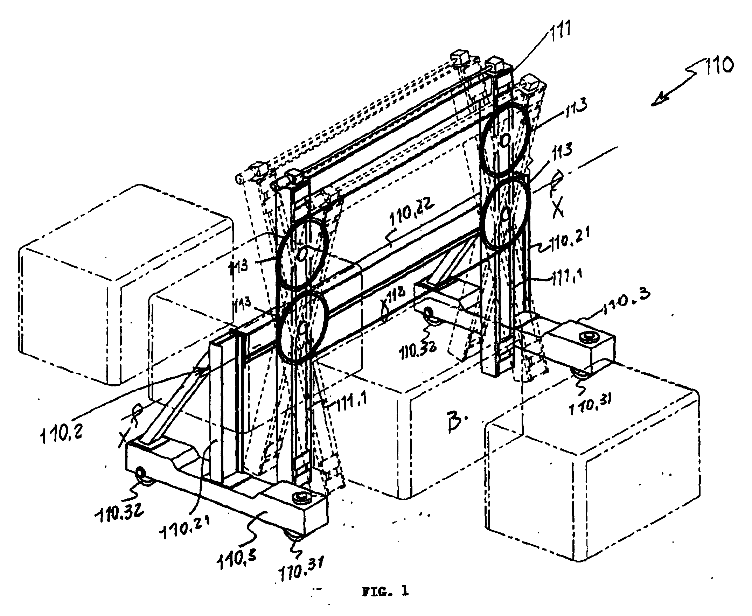

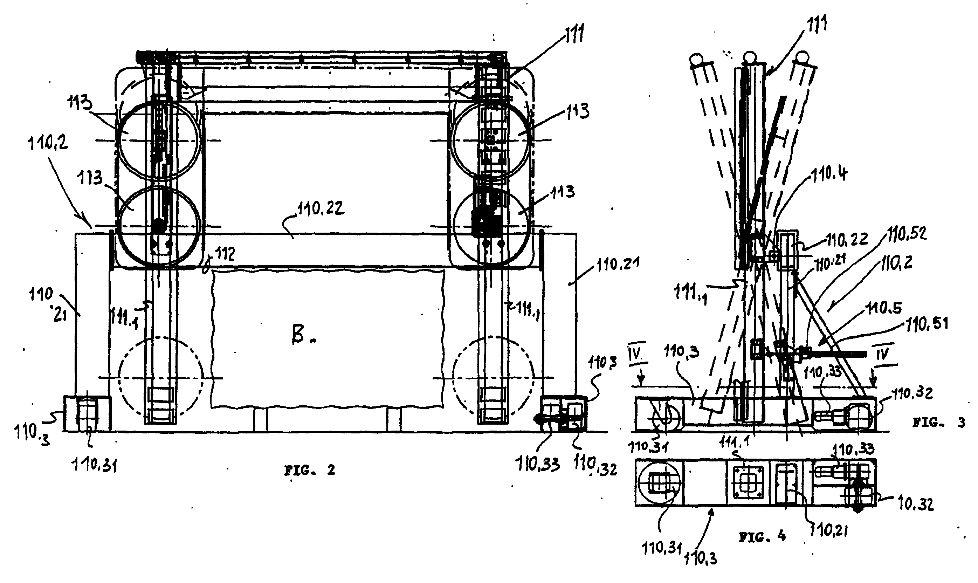

### Example of embodiment (Figures 1-4)

In Fig. 1, 110 designates as a whole the wire sawing machine according to the invention, here designed as a machine for the trimming and/or squaring of blocks, particularly of stonelike material.

The said sawing machine 110 comprises a portal structure 111, supported relative to a substantially trestle-type support 110.2, in a manner such as to oscillate relative to a substantially horizontal axis X-X and in a manner such that a block B (Fig. 1) of material to be trimmed or squared can be arranged through the opening of said portal 111. The free lower ends of the uprights 111.1 of the said portal 111 are very close to the base of the said trestle-type support 110.2.

The said trestle-type support 110.2 includes a pair of vertical columns 110.21, external relative to the uprights 111.1 of the portal 111 and connected at the top by means of a cross-piece 110.22.

Advantageously, the said trestle-type support 110.2 is mounted on a pair of wheeled shoes 110.3, each shoe 110.3 being fixed to the foot of an associated column 110.21.

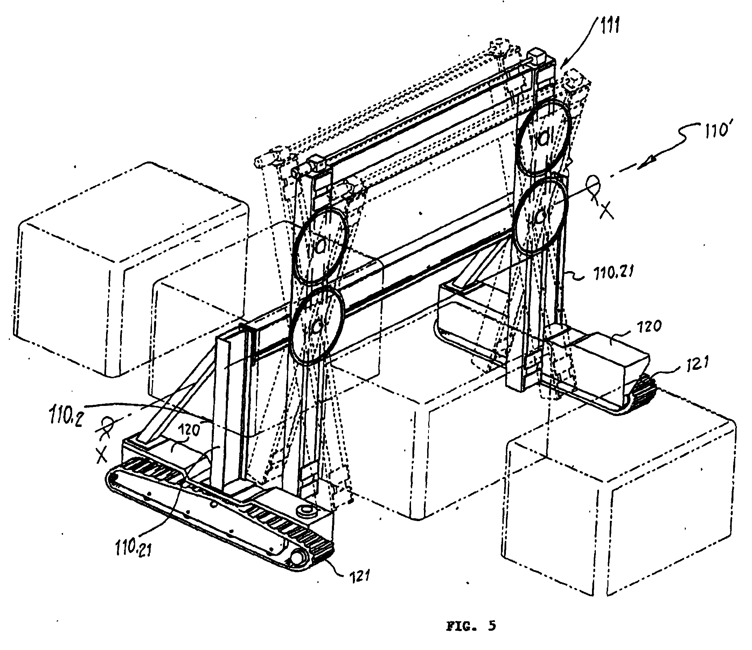

Each shoe 110.3 possesses a pivoting wheel 110.31 and a wheel 110.32 which is driven to rotate by means of its own motor means 110.33 (Figs. 3, 4), preferably under remote control. In this manner, the sawing machine 110 is self-propelled.

The said portal structure 111 is connected in an oscillating manner to the said trestle-type support 110.2 by means of a cylindrically hinged pivot 110.4 (Fig. 3), provided between the uprights 111.1 of the portal 111 and the said cross-piece 110.22 of the support 110.2 and allowing its oscillation about the said axis X-X.

Means 110.5 (Fig. 3) for regulating the portal structure 111 and locking it in an oscillating position about the said axis X-X relative to the said trestle-type support 110.2 are provided between the said portal 111 and the said support. The said regulating and locking means 110.5 include, in accordance with the example shown, an adjustment screw 110.51 having a substantially horizontal axis and articulated at one of its ends by a kinematic connecting rod and crank connection to an upright 111.1 of the said portal 111. The said adjustment screw 110.51 is engaged by a threaded coupling in a corresponding nut 110.52 supported to rotate about the axis of the screw 110.51 relative to a column 110.21 of the support 110.2. By means of manual rotation of the said nut 110.52 in one direction or the other the extension or retraction of the corresponding adjustment screw 110.51 is caused, consequently making the said portal structure 111 oscillate in opposite directions about the axis X-X as shown in broken lines in Figures 1 and 3.

In the said wire sawing machine 110 having a portal structure 111 for the cutting of material into blocks, a wire-shaped cutting tool, known as the "cutting wire", in the form of a closed ring, is caused to circulate over four pulleys 113 (one of which is driven) supported by the portal 111 and mutually coplanar, and is caused to move in a plane (called the "cutting plane") substantially parallel to the median plane cutting both the uprights 111.1 and the cross-piece 111.2 of the said portal, so that when a block of material to be cut is arranged within the opening of the portal, for example on a convenient support means, it can be cut crosswise in the cutting plane. To this end, the closed-ring cutting wire 112 performs the cutting of the block in the cutting plane with its lower strand (the strand remote from the cross-piece of the portal), while it circulates between the said pulleys 113, which are slidingly supported along the said uprights 111.1 of the portal structure 111, performing a working travel between a raised position, in which its lower strand is not in contact with the block to be cut, and a lower position, in which the said strand has performed a cut passing transversely through the block within the cutting plane. After the cut has been made, the cutting wire 112 performs the reverse travel until reaching its raised position of rest.

By means of this arrangement, when it is desired to trim and/or square a block B of stonelike or similar material, for example in a stone quarry yard, the sawing machine 110, with its cutting wire 112 in the raised position of rest, is caused to move towards the said block B until its portal 111 is arranged astride the said block, in the appropriate position. Then, by acting upon the regulating and locking means 110.5, the portal 111 is oriented about the axis X-X at an inclination relative to the horizontal corresponding to that of the face of the block which it is desired to trim or square. The cut is made, the cutting wire 112 then being returned to its raised position of rest. This sequence may be repeated until the block B has been completely trimmed and/or squared.

It should be noted that the regulating and locking means may comprise a pneumatic jack to replace the adjustment screw and the corresponding nut.

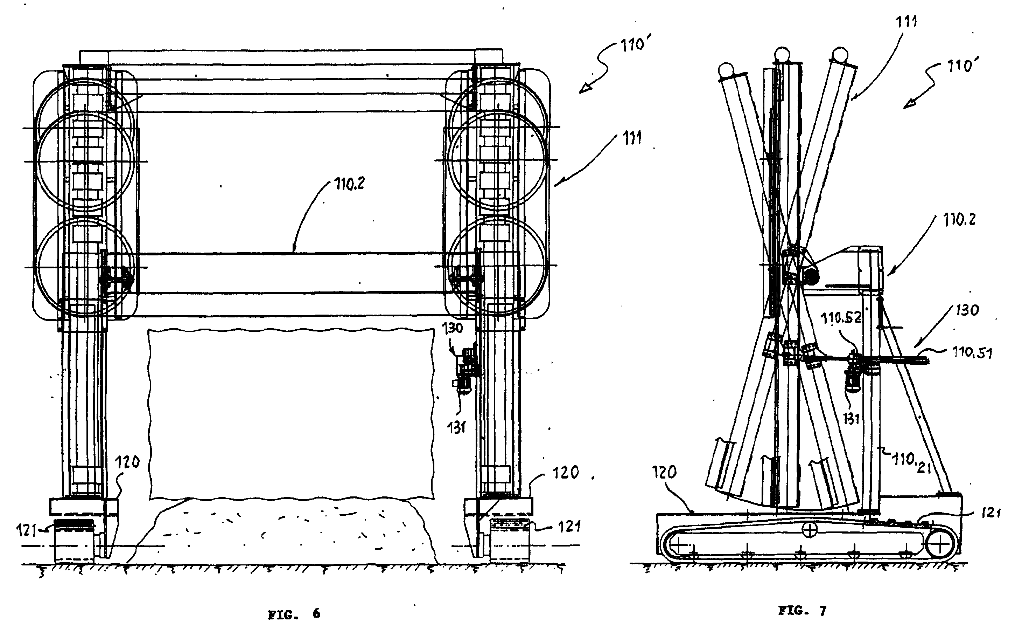

### Alternative embodiments (Figures 5-7)

The wire sawing machine according to the invention is here indicated by 110' and is substantially similar in structure and function to the wire sawing machine 110 described above with reference to Figures 1-4. The parts of the sawing machine 110' similar to those of the sawing machine 110 are indicated by the same reference numerals and are not further described.

As an alternative embodiment, the trestle-type support 110.2 of the sawing machine 110' is mounted on a pair of shoes 120 having tracks 121, each shoe being fixed to the foot of a respective column 110.21 of the said trestle-type support 110.2.

The sawing machine 110' is thus self-propelled. The said tracks 121 are controlled by respective motor means (known per se), preferably under remote control.

Furthermore, in the sawing machine 110', means 130 (Fig. 7) are provided for regulating and locking the oscillating portal structure 111 in a position of oscillation about the said axis X-X.

The said regulating and locking means 130 include, as a variation on the corresponding means 110.5 of the sawing machine 110, reversible electric geared motor means 131, which selectively drive in rotation, and in opposite directions, the nut 110.52, so as to determine the corresponding extension or retraction of the respective adjustment screw 110.51, causing the said portal structure 111 to oscillate, relative to the trestle-type support 110.2, in opposite directions about the axis X-X, as shown in Figures 5 and 7.

Otherwise, reference is made to the foregoing description of the sawing machine 110.

## Claims

1. Wire sawing machine for the trimming and/or squaring of blocks, particularly of stonelike material, characterized in that it comprises a portal structure (111) for the cutting of blocks, supported relative to a substantially trestle-type support (110.2), in a manner such as to oscillate relative to a substantially horizontal axis (X-X) and in a manner such that a block of material to be trimmed or squared can be arranged through the opening of said portal (111), so that in order to trim or square a block (B) of stonelike or similar material the said portal (111) is arranged astride the said block, the portal (111) is oriented about the axis (X-X) at an inclination relative to the horizontal corresponding to that of the face of the said block which it is desired to trim or square, and the cut is made, this sequence being repeated until the block (B) has been completely trimmed and/or squared.

2. Wire sawing machine according to Claim 1, characterized in that the said trestle-type support (110.2) includes a pair of columns (110.21), external relative to the uprights (111.1) of the portal (111) of said sawing machine.

3. Wire sawing machine according to Claim 1 or 2, characterized in that the said trestle-type support (110.2) is mounted on a pair of wheeled shoes (110.3).

4. Wire sawing machine according to Claim 3, characterized in that each shoe (110.3) possesses a pivoting wheel (110.31) and a wheel (110.32) which is driven to rotate by means of its own motor means (110.33), preferably under remote control, so that the sawing machine is self-propelled.

5. Wire sawing device according to Claim 1, characterized in that the said portal structure (111) is connected in an oscillating manner to the said trestle-type support (110.2) by means of a cylindrically hinged pivot (110.4), provided between the uprights (111.1) of the portal (111) and the said support (110.2) and allowing its oscillation about the said axis (X-X).

6. Wire sawing machine according to Claim 1, characterized in that it comprises means (110.5, 130) for regulating the said portal structure (111) and locking it in an oscillating position about the said axis (X-X) relative to the said trestle-type support (110.2).

7. Wire sawing machine according to Claim 6, characterized in that the said regulating and locking means (110.5, 130) include an adjustment screw (110.51), articulated at one of its ends relative to the said portal (111) and engaged by a threaded coupling in a corresponding nut (110.52) supported relative to the support (110.2).

8. Wire sawing machine according to Claim 6, characterized in that the said regulating and locking means (110.5, 130) include jack means articulated between the said portal structure of the wire sawing machine and the said support.

9. Wire sawing machine according to Claim 1 or 2, characterized in that the said trestle-type support (110.2) is mounted on a pair of shoes (120) having tracks (121), the said tracks being controlled by motor means, preferably under remote control, so that the sawing machine is self-propelled.
